# EUROPÄISCHE PATENTSCHRIFT

(11) **EP 3 896 953 B1**
(45) Veröffentlichungstag und Bekanntmachung des Hinweises auf die Patenterteilung: **01.05.2024**
(21) Anmeldenummer: 20170041.6
(22) Anmeldetag: 17.04.2020
(51) Int. Cl.: H04N 1/60

(54) **VERFAHREN ZUR STEUERUNG EINES DEKOR-DRUCKPROZESSES**
METHOD FOR CONTROLLING A DECORATIVE PRINTING PROCESS
PROCÉDÉ DE COMMANDE D'UN PROCESSUS D'IMPRESSION DÉCORATIVE

(43) Veröffentlichungstag der Anmeldung: 20.10.2021
(73) Patentinhaber: Felix Schoeller GmbH & Co. KG, 49086 Osnabrück (DE)
(72) Erfinder: Kloskowski, Michael, 49565 Bramsche (DE); Van der Zwan, Rick, 49186 Bad Iburg (DE); Lauxtermann, Mathias, 49086 Osnabrück (DE); Hornig, Knut, 49549 Ladbergen (DE); Altenburg, Christopher, 49090 Osnabrück (DE)
(74) Vertreter: Cohausz & Florack

(56) Entgegenhaltungen:
- DE-A1-102005 015 506
- DE-A1-102005 015 746
- DE-A1-102005 060 108
- US-B1- 6 480 299

## Beschreibung

Die Anmeldung betrifft ein Verfahren zur Steuerung eines Dekor-Druckprozesses zum Drucken eines Dekors auf einen Träger, insbesondere zur Herstellung eines Dekorträgers, insbesondere in Form einer Dekorfolie.

Dekorative Beschichtungswerkstoffe (vorliegend auch Dekorträger genannt), sogenannte Dekorpapiere oder Dekorfolien, werden beispielsweise zur Oberflächenbeschichtung bei der Möbelherstellung oder im Innenausbau, z.B. bei Laminatböden, eingesetzt.

Unter einer Dekorfolie ist vorliegend insbesondere ein kunstharzgetränkter oder kunstharzgetränkter und oberflächenbehandelter sowie bedruckter Träger (vorzugsweise Papier/Dekorpapier/Dekorrohpapier) zu verstehen. Dekorfolien können wiederum auf einer Trägerplatte appliziert werden, insbesondere mit einer Trägerplatte verleimt oder verklebt werden.

Je nach Art des Imprägniervorgangs kann zwischen Dekorfolien mit durchimprägniertem Papierkern und sogenannten Vorimprägnaten unterschieden werden, bei denen das Papier in der Papiermaschine online oder offline nur teilweise imprägniert wird. Für das Aufkleben eines Vorimprägnates auf eine Trägerplatte (z.B. eine aus Holzwerkstoff hergestellte Platte, wie eine Spanplatte oder MDF (Mitteldichte Holzfaserplatte) -Platte)) können Harnstoffleime oder Polyvinylacetat (PVAC)-Leime eingesetzt werden. Diese führen nicht immer zu der gewünschten Verklebung der Dekorträger.

Ferner sind sogenannte Schichtpressstoffe bekannt. Schichtstoffe können beispielsweise High Pressure Laminates (HPL) oder Low Pressure Laminates (LPL) sein, insbesondere abhängig von dem Herstellungsverfahren (HPL-Verfahren oder LPL-Verfahren).

Dies sind Laminate, die durch Verpressen mehrerer imprägnierter, aufeinander geschichteter Subträger (vorzugsweise Papiere) gebildet sind. Der Aufbau eines derartigen High Pressure Laminates umfasst im Allgemeinen ein (höchste) Oberflächenbeständigkeit erzeugendes transparentes Auflageblatt (Overlay), ein harzgetränktes Dekorpapier und eine oder mehrere phenolbeharzte Kraftpapier/e. Als Unterlage bzw. Trägerplatte können hierfür beispielsweise Hartfaser-, Sperrholz- und Holzspanplatten eingesetzt werden.

Bei den nach dem sogenannten Kurztaktverfahren hergestellten Laminaten (Low Pressure Laminates) wird das mit Kunstharz getränkte Dekorrohpapier direkt mit der Unterlage, beispielsweise einer Spanplatte, unter Anwendung eines niedrigen Drucks verpresst.

Der bei den oben genannten Beschichtungswerkstoffen verwendete Träger (Dekorpapier oder Dekorfolie) kann weiß oder farbig, mit oder ohne zusätzlichen Aufdruck, eingesetzt werden. Hinsichtlich der anwendungstechnischen Eigenschaften müssen die als Ausgangsmaterialien dienenden Träger, insbesondere die sogenannten Dekorrohpapiere, vorzugsweise bestimmte Anforderungen erfüllen. Es sei zunächst angemerkt, dass ein bedruckter Träger vorliegend insbesondere eine Dekorfolie ist und ein zu bedruckender Träger ein Dekorrohpapier/Dekorpapier. Unter einem zu bedruckenden Träger ist bei einem Spezialfall auch ein vorliegend als preimprägnierte Dekorfolie bezeichnetes Dekorrohpapier zu verstehen, wobei bei einer preimprägnierte Dekorfolie diese vor dem Bedrucken bereits mit einem Harzmaterial getränkt wird.

Zu den anwendungstechnischen Eigenschaften gehören insbesondere eine hohe Opazität zur besseren Abdeckung der Unterlage, gleichmäßige Formation und Grammatur des Blatts für eine gleichmäßige Harzaufnahme, hohe Lichtbeständigkeit, hohe Reinheit und Gleichmäßigkeit der Farbe für gute Reproduzierbarkeit des aufzudruckenden Musters, hohe Nassfestigkeit für einen reibungslosen Imprägniervorgang, entsprechende Saugfähigkeit zur Erlangung des erforderlichen Harzsättigungsgrads und/oder eine gute Trockenfestigkeit, die bei Umrollvorgängen in der Papiermaschine und/oder beim Bedrucken in der Druckmaschine wichtig ist.

Die Veredelung von Trägern, also insbesondere von Werkstoffoberflächen, kann optischer Natur (durch entsprechende Farbgebung) und/oder physikalischer Natur sein (durch Beschichtung der Plattenoberfläche mit entsprechender Funktionalität und/oder Struktur). Dekorträger können mit oder ohne aufgedrucktes Muster verarbeitet werden. Hierzu kann z.B. das bedruckte oder unbedruckte Dekorpapier einstufig oder mehrstufig mit Kunstharzen getränkt, anschließend getrocknet - wobei das Harz noch reaktiv bleiben kann - und dann in Bögen oder als Rollenware mit einer Unterlage irreversibel (heiß) verpresst werden.

Das Aufbringen eines Dekors (auch Druckmuster genannt) auf einen Träger kann im Tiefdruckverfahren erfolgen. Insbesondere bei der Erzeugung marktüblicher Druckmuster weist diese Drucktechnik den Vorteil auf, große Papiermengen mit hoher Maschinengeschwindigkeit bedrucken zu können. Das Tiefdruckverfahren ist jedoch insbesondere für geringere Mengen Dekorpapier wenig rentabel und hinsichtlich der Druckqualität bei komplizierten Mustern häufig nicht ausreichend gut. Von den Drucktechniken, die den Anforderungen an Flexibilität und Qualität standhalten, gewinnt das Tintenstrahl-Druckverfahren (auch Ink-Jet-Druckverfahren genannt) daher zunehmend an Bedeutung.

Um Träger, insbesondere in Form von Dekorrohpapieren, durch das Ink-Jet-Druckverfahren bedruckbar zu machen, können diese vorzugsweise mit einer oder mehreren Funktionsschicht/en zur Aufnahme der Druckfarbe, insbesondere der Tinte, und Fixierung der Farbstoffe beschichtet sein. Solche durch das Ink-Jet-Druckverfahren bedruckbaren Dekorrohpapiere sind beispielsweise in der DE 199 16 546 A1 und der EP 1 044 822 A1 offenbart. Ein Beispiel für Dekorrohpapiere, die durch das Ink-Jet-Druckverfahren bedruckbar sind und auf die keine Funktionsschicht aufgetragen ist, ist in der EP 295 90 58 A1 beschrieben.

Die auch als Tintenaufnahmeschichten bezeichneten Funktionsschichten können Pigmente, wasserlösliche oder wasserdispergierbare Polymere als Bindemittel, farbstofffixierende Substanzen und/oder weitere in solchen Schichten üblicherweise verwendete Hilfsstoffe enthalten.

Träger in Form von Dekorrohpapieren/Dekorpapieren/Papieren unterscheiden sich in ihren Eigenschaften von normalen handelsüblichen Ink-Jet-Papieren. Dekorrohpapiere/Dekorpapiere/Papiere weisen vorzugsweise eine sogenannte offene Oberfläche auf, damit sie insbesondere mit einem Imprägnierharz schnell und gleichmäßig durchtränkt werden können.

Zwar weist ein/e mit einer der oben beschriebenen Tintenaufnahmeschichten versehenes Dekorrohpapier eine gute Ink-Jet-Bedruckbarkeit auf, es hat jedoch zumindest auf einer Seite des Papiers eine weitgehend abgedeckte Papierstruktur. Die zwischen den Fasern befindlichen Zwischenräume sind in der Regel einseitig größtenteils verschlossen und stehen somit für die Aufnahme von Imprägnierharzen nur eingeschränkt zur Verfügung.

Im Stand der Technik werden die komplexen Zusammenhänge zwischen zu bedruckenden Trägern, Druckfarben und den den Druckprozess ausführenden Druckmaschinen beschrieben. Diese komplexen Zusammenhänge führen dazu, dass vor dem Druckprozess, der mindestens einen Druckschritt umfasst, eine Vielzahl von Testdruckprozessen durchzuführen ist, um für ein bestimmtes zu druckendes Dekor einen bedruckten Träger mit einer gewünschten Qualität zu erzielen.

In der Regel kommen Träger und Druckfarben zum Einsatz, die in ihren Qualitätseigenschaften zwischen verschiedenen Produktionschargen nicht vollständig konstant sind. Das gilt sowohl für die zu bedruckenden (insbesondere bahnförmigen) Träger, wie z.B. Dekorrohpapiere, aber auch für die eingesetzten Druckfarben, wie den Tinten, und/oder einer in einer Druckmaschine aufgebrachten Beschichtung, wie z.B. den Primern. Ferner kann die Druckmaschine selbst nicht vollständig konstant betreibbar sein, beispielsweise aufgrund von unterschiedlichen Umgebungsbedingungen.

Aufgrund der Komplexität eines Druckprozesses und der Zusammenhänge der vorgenannten einzelnen Faktoren ist es im Stand der Technik nicht vermeidbar, bei der Durchführung eines Druckauftrages bzw. Druckprozesses zeit- und kostenaufwendige vorbereitende Maßnahmen, Testläufe und/oder Anpassungen durchzuführen. In der Regel ist es erforderlich, mehrfach ein Variieren von Einstellungen bzw. Drucksteuerparametern an der Druckmaschine und/oder ein Variieren des zu verwendenden Trägers und/oder ein Variieren der zu verwendenden Druckfarbe durchzuführen, um das gewünschte Druckergebnis entsprechend einem bereitgestellten, insbesondere vorgegebenen und zu druckenden Dekors zu erzielen. Insbesondere kann ein zu druckendes Dekor bzw. zu druckendes Dekorzielbild durch mindestens einen Dekorparameterdatensatz bereitgestellt werden.

Da in der Regel die Zusammenhänge, insbesondere zwischen den Eigenschaften der eingesetzten Produkte, wie den Trägern (bzw. Substraten) und den Druckfarben sowie der mindestens einen Druckmaschine, nur unzureichend bekannt sind, beruht die Anpassung der Parameter vielfach auf Erfahrungswerten. Die verschiedenen Ansätze beruhen also insbesondere auf den Erfahrungen und dem Wissen der menschlichen Anwender und sind daher oft nicht effizient und reproduzierbar.

Zwar sind die jeweiligen Hersteller der eingesetzten Druckfarben und zu bedruckenden Träger bestrebt, die Qualität auch von unterschiedlichen Produktionschargen so konstant wie möglich zu halten. Dieses Ziel kann jedoch u.a. aufgrund des Einsatzes von natürlichen Rohstoffen in den Produkten, wie Mineralien (Calciumcarbonat, Titandioxid, Silikate, etc.) und natürlichen und synthetischen Polymeren (Stärke, Polyvinylalkohol etc.), nicht gänzlich erreicht werden.

Ferner können (relevante) Trägermaterialparameter der zu bedruckenden Träger bzw. Drucksubstrate und (relevante) Druckfarbeparameter, insbesondere der verwendeten Tinten, insbesondere bei dem Tiefdruckverfahren, aber auch beim Inkjet-Verfahren, nur teilweise bekannt sein. Jedoch ist erkannt worden, dass die Trägermaterialparameter und die Druckfarbeparameter für die Qualität des gedruckten Dekors in Kombination mit den Druckmaschinensteuerparametern eine wichtige Rolle im Druckprozess spielen.

Im Stand der Technik werden durch Andrucke mit Hilfe von Standardeinstellungen an der Druckmaschine Testmuster unter Material und Zeitverlusten hergestellt und insbesondere hinsichtlich des Farbortes und/oder der Farbdichte sowie weiterer Qualitätsparameter überprüft. Im Fall von Abweichungen von einem zu erreichenden Zielwert, der beispielsweise in Form eines entsprechenden Kriteriums vorgegeben sein kann, finden Anpassungen an den genannten Parametern statt. Häufig ist jedoch nicht bekannt, wie z.B. Maschinensteuerparameter eingestellt werden sollten, um auf die variierenden Qualitäten von Substraten und/oder Tinten zu reagieren.

Für digitale Druckverfahren des Stands der Technik gilt Ähnliches. Zwar kann im Bereich der dekorativen Träger bzw. Beschichtungswerkstoffe das Verfahren verkürzt und die Verluste reduziert werden, da an einer digitalen Druckmaschine eine Änderung der Einstellung im Allgemeinen mit einem geringeren Aufwand erfolgen kann. Dennoch stellt der zeitliche Verlust durch das auch bei digitalen Druckverfahren erforderliche Erstellen von Testdrucken und das Anpassen der Druckmaschine eine erhebliche und bisher ungelöste Herausforderung dar. Beispielsweise kann das gesamte Bild eine Abweichung in einer Farbrichtung haben, oder die Farbintensität kann zu stark oder zu niedrig sein, oder die Gesamt-Helligkeit kann zu hoch oder zu niedrig sein. Eine Ink-Jet-Druckmaschine, die im Single- oder Multipass-Verfahren betrieben werden kann, bietet insbesondere eine Vielzahl von Einstellungsmöglichkeiten, deren optimale Einstellung bei einem Druckprozess im Stand der Technik durch eine Vielzahl von auszuführendenden Testdrucken vor jedem Dekor-Druckprozess zu ermitteln ist.

Die Verbreitung von Digitaldruckmaschinen nimmt in vielen Bereichen zu und ersetzt mehr und mehr die bisher üblichen (analogen) Druckverfahren. Dabei wird nicht nur an der Hardware, sondern auch an der Steuerung des Druckprozesses gearbeitet, wie es in der DE 10 2017 222 327 A1 beschrieben wird. Mittels Rechner werden in diesem Stand der Technik im Produktionsprozess Qualitätsdaten bewertet und mit einem Regelwerk notwendige Anpassungen im Druckprozess angestoßen. Hier werden jedoch die Parameter der eingesetzten Träger und/oder Druckfarben nicht berücksichtigt.

Die DE 10 2017 207 306 A1 beschreibt insbesondere ein Verfahren zur Überwachung eines Färbungsstandards für eine Bedruckstoffe verarbeitende Maschine mittels eines Rechners. Der Färbestandard setzt sich aus unterschiedlichen Sollwerten zusammen und wird manuell an den jeweiligen Auftrag angepasst. In die Bewertung durch den Rechner fließen z.B. auch Druckmaschinensteuerparameter ein. Die Einstellung des Färbestandards, auf den das Verfahren zugreift, findet zu Beginn jedoch manuell und auf Basis der Erfahrungen der Drucker statt. Somit erfordert auch dieses Verfahren in der Praxis ein Durchführen einer Vielzahl von Testdrucken bzw. Testdruckschritten. Darüber hinaus offenbart die DE 10 2005 060 108 A1 ein Verfahren, das es einem menschlichen Bediener einer Druckvorrichtung ermöglicht, die Auswirkungen von Parameteränderung ohne tatsächlichen Druck auf einem Bildschirm zu verfolgen. Aus der DE 10 2005 015 746 A1 ist ein Verfahren zum Trainieren von Bedienpersonal einer Druckvorrichtung bekannt, wobei druckvorstufenbasierte Sollbilder den Bedienern zum einen unverändert auf einer Anzeigeeinrichtung und zum anderen verfälscht durch eine Manipulations- und eine Simulationseinheit präsentiert werden. Die DE 10 2005 015 506 A1 betrifft ein weiteres Verfahren zur Schulung von Bedienpersonal, bei dem einem Bediener ein zuvor gespeichertes Druckergebnis basierend auf den von ihm eingegebenen Stellgrößen angezeigt wird. Schließlich betrifft die US 6 480 299 B1 ein auf einem neuronalen Netz basierendes Verfahren zum Farbmanagement.

Daher liegt der Anmeldung die Aufgabe zugrunde, ein Verfahren zur Steuerung eines Dekor-Druckprozesses zum Drucken eines Dekors auf einen Träger zur Verfügung zu stellen, welches eine verbesserte Effizienz aufweist und insbesondere den Zeit- sowie Kostenaufwand reduziert.

Diese Aufgabe wird gemäß einem ersten Aspekt der Anmeldung gelöst durch ein Verfahren ausgeführt von mindestens einer Recheneinrichtung zur Steuerung eines Dekor-Druckprozesses zum Drucken eines Dekorzielbilds auf einen Träger gemäß dem Anspruch 1. Das Verfahren umfasst:
- Bereitstellen des in dem Druckprozess zu druckenden Dekorzielbilds durch mindestens einen Dekorparameterdatensatz,
- Simulieren des Druckprozesses in einem Simulationsschritt, basierend auf dem Dekorparameterdatensatz, mindestens einem Druckprozessparameterdatensatz und gespeicherten historischen Druckdatensätzen, derart, dass ein digitales Dekorbild erstellt wird,
- Überprüfen des erstellten digitalen Dekorbilds, basierend auf dem zu druckenden Dekorzielbild und mindestens einem Überprüfungskriterium,
   - wobei das Überprüfen des erstellten digitalen Dekorbilds ein Vergleichen des durch den Simulationsschritt erstellten digitalen Dekorbilds und des Dekorzielbilds umfasst,
   - wobei das mindestens eine Überprüfungskriterium ein Vergleichskriterium ist, das mindestens ein bestimmtes optisches Mindestähnlichkeitsmaß zwischen dem durch den Simulationsschritt erstellten digitalen Dekorbild und dem Dekorzielbild vorgibt und
- wenn das Überprüfungskriterium erfüllt ist, Ausgeben des in dem Simulationsschritt verwendeten Druckprozessparameterdatensatzes zum Durchführen des Druckprozesses.

Indem im Gegensatz zum Stand der Technik anmeldungsgemäß ein Dekordruck-Verfahren bereitgestellt wird, bei dem der Dekor-Druckprozess (nachfolgend auch kurz als Druckprozess bezeichnet) insbesondere vor dem tatsächlichen Ausführen des Druckprozesses simuliert wird, wird die Effizienz des Druckprozesses verbessert und insbesondere der Zeit- sowie Kostenaufwand reduziert. Die erforderlichen Vorbereitungsmaßnahmen für einen Druckprozess können signifikant reduziert werden. Die Anzahl der notwendigen Testdrucke kann zumindest reduziert werden, insbesondere kann das Ausführen von Testdruckprozessen vollständig entfallen.

Das Verfahren dient zur Steuerung eines Druckprozesses. In dem Druckprozess wird ein bestimmtes bzw. gewünschtes Dekor in Form eines Dekorzielbilds durch eine Druckmaschine auf einen zu bedruckenden Träger (nachfolgend auch kurz nur mit Träger bezeichnet) gedruckt. Für einen Druckprozess werden vorzugsweise eine bestimmte Druckmaschine, ein bestimmter Träger und eine bestimmte Druckfarbe bereitgestellt, um abhängig von eingestellten Druckmaschinensteuerparametern auf dem bestimmten Träger ein bestimmtes Dekorbild mit der bestimmten Druckfarbe zu drucken.

Unter einem Träger ist vorliegend insbesondere ein Trägersubstrat zu verstehen, vorzugsweise ein (zuvor beschriebenes) Dekorrohpapier. Unter einer Druckfarbe ist vorliegend insbesondere eine gefärbte und färbende Flüssigkeit zu verstehen, welche auf dem Träger durch die Druckmaschine aufgebracht werden kann, vorzugweise eine (zuvor beschriebene) Tinte. Eine Druckmaschine kann vorliegend eine analoge oder digitale Dekor-Druckmaschine sein, vorzugsweise eine nach dem (zuvor beschriebenen) Tintenstrahl-Druckverfahren arbeitende Dekor-Druckmaschine.

Das Verfahren dient insbesondere zur Vorbereitung des (tatsächlichen) Druckprozesses. Insbesondere dient das anmeldungsgemäße Verfahren dazu, einen Druckprozessparameterdatensatz zu ermitteln, wobei der durchzuführende Druckprozess anhand der Vorgaben/Parameter des ermittelten Druckprozessparameterdatensatzes durchgeführt wird.

Das Verfahren wird durch mindestens eine Recheneinrichtung bzw. Computereinrichtung (mit Prozessor, Speichermittel, Schnittstellen etc.) durchgeführt.

Zunächst kann ein zu druckendes Dekorzielbild durch mindestens einen Dekorparameterdatensatz bereitgestellt werden, insbesondere vorgegeben werden. Ein zu druckendes Dekorzielbild ist insbesondere ein optisches Muster, das auf den Träger gedruckt werden soll. Vorzugsweise kann das zu druckende Dekorzielbild in Form eines digitalen Dekorparameterdatensatzes (z.B. eine entsprechende Datei) vorgegeben werden. Die Recheneinrichtung kann insbesondere über mindestens ein Empfangsmodul verfügen, um einen Dekorparameterdatensatz zu erhalten und damit insbesondere bereitzustellen.

Optional kann eine Benutzerschnittstelle vorgesehen sein, welche eine Einstellung bzw. Anpassung von Dekorparametern durch einen Nutzer ermöglicht, um insbesondere eine Einstellung einer gewünschten optischen Anmutung des zu druckendes Dekorzielbilds zu erlauben. Vorzugsweise kann ein Dekorparameterdatensatz mindestens einen Dekorparameter umfassen, ausgewählt aus der Gruppe, umfassend Farbgebung und optische Struktur. Diese Parameter können Subparameter umfassen, wie Schärfe, Kontrast, Helligkeit, Farbton etc. Insbesondere kann die Benutzerschnittstelle eine Einstellung einer Mehrzahl von Dekorparametern ermöglichen. Die eingestellten Dekorparameter (die insbesondere das z.B. auf einem Bildschirm der Recheneinrichtung anzeigbares Dekorzielbild repräsentieren) können von einem Dekorparameterverknüpfungsmodul zu einem Dekorparameterdatensatz verknüpft werden.

Basierend auf dem bereitgestellten Dekorparameterdatensatz bzw. dem gewünschten Dekorzielbild wird in mindestens einem Simulationsschritt ein nachfolgend durchzuführender Druckprozess simuliert. Insbesondere kann eine Recheneinrichtung über mindestens ein Simulationsmodul verfügen, dem beispielsweise der Dekorparameterdatensatz durch das Empfangsmodul zur Verfügung gestellt werden kann.

Ein Druckprozess wird anhand des Dekorparameterdatensatzes, eines Druckprozessparameterdatensatzes und gespeicherten historischen Druckdatensätzen simuliert. Ein Druckprozessparameterdatensatz weist vorzugsweise eine Mehrzahl von Druckprozessparametern auf, die einen Druckprozess und insbesondere das Ergebnis des Druckprozesses zumindest beeinflussen. Ein historischer Datensatz umfasst insbesondere Druckdaten von (tatsächlich) ausgeführten Druckprozessen. Die Druckdaten (die insbesondere die entsprechenden historischen Druckprozessparameterdatensätze und die jeweils gedruckten Dekorbilder umfassen kann) sind insbesondere aufgezeichnet worden und in einer Datenbank gespeichert worden.

Basierend auf diesen historischen Druckdaten, dem Dekorparameterdatensatz und einem bestimmten in dem Simulationsschritt eingestellten Druckprozessparameterdatensatz wird ein Druckschritt simuliert. Hierbei kann der eingestellte Druckprozessparameterdatensatz insbesondere von dem Dekorparameterdatensatz abhängen. Aufgrund der in der Vergangenheit durchgeführten und insbesondere aufgezeichneten historischen Druckdatensätze kann in dem Simulationsschritt das Druckergebnis eines Druckprozesses bzw. Druckschrittes des Druckprozesses (der entsprechend der Parameter des Druckprozessparameterdatensatzes simuliert wird) (realitätsnah) simuliert werden.

Simulieren meint insbesondere, dass das Druckergebnis eines entsprechend dem Druckprozessparameterdatensatz ausgeführten Druckprozesses vorhergesagt wird. Das simulierte Druckergebnis ist ein erstelltes digitales Dekorbild.

Anmeldungsgemäß ist vorgesehen, dass vor einer Verwendung des in einem Simulationsschritt eingesetzten Druckprozessparameterdatensatzes in einem Druckprozess, das Druckergebnis bzw. das erstellte digitale Dekorbild überprüft wird. Die Überprüfung basiert insbesondere auf einem Überprüfungskriterium, dem bereitgestellten und zu druckenden Dekorzielbild und dem in dem Simulationsschritt erstellten digitalen Dekorbild. Bei einer Variante der Anmeldung kann das Überprüfen (inhärent) im Rahmen des Simulationsprozesses erfolgen.

Vorzugsweise wird ein Simulationsprozess mit einer Mehrzahl von Simulationsschritten, jeweils mit unterschiedlichen Druckprozessparameterdatensätzen, durchgeführt, bis das in einem Simulationsschritt erstellte digitale Dekorbild das Überprüfungskriterium erfüllt. Insbesondere kann in jedem Simulationsschritt mindestens ein Parameter des Druckprozessparameterdatensatzes im Vergleich zu dem vorherigen Simulationsschritt geändert sein. Die Änderung eines Parameters kann insbesondere von dem Überprüfungsergebnis abhängen.

Beispielsweise kann in dem Überprüfen festgestellt werden, ob sich das simulierte Druckergebnis im Vergleich zu dem vorherigen simulierten Druckergebnis, basierend auf dem zu druckenden Dekorzielbild, verschlechtert oder verbessert hat. Dies kann bei der nächsten Änderung eines Parameters berücksichtigt werden. Wenn beispielsweise festgestellt wird, dass eine Erhöhung eines Parameterwerts das simulierte Druckergebnis verbessert hat, kann in dem nächsten Simulationsschritt eine weitere Erhöhung erfolgen (für den Fall, dass das Überprüfungsergebnis noch nicht erfüllt ist). Wenn hingegen eine Erhöhung eines Parameterwerts das simulierte Druckergebnis verschlechtert hat, kann in dem nächsten Simulationsschritt eine Reduktion erfolgen. Bei einer Variante der Anmeldung kann das Überprüfen (inhärent) im Rahmen des Simulationsprozesses erfolgen.

Wenn das mindestens eine Überprüfungskriterium von dem simulierten digitalen Dekorbild erfüllt ist, erfolgt ein Ausgeben des in dem Simulationsschritt verwendeten Druckprozessparameterdatensatzes zum Durchführen des Druckprozesses. Beispielsweise kann eine (unmittelbare) Ansteuerung einer bestimmten Druckmaschine entsprechend dem ermittelten Druckprozessparameterdatensatz erfolgen.

Gemäß einer Ausführungsform des anmeldungsgemäßen Verfahrens kann der Druckprozessparameterdatensatz einen Trägermaterialparametersatz und/oder einen Druckfarbeparameterdatensatz und/oder einen Druckmaschinensteuerparameterdatensatz umfassen. Jeder dieser Parameterdatensätze kann vorzugsweise eine Mehrzahl von entsprechenden Parametern aufweisen.

Der Trägermaterialparametersatz kann mindestens einen Trägermaterialparameter umfassen. Ein Trägermaterialparameter meint insbesondere einen die Qualität des Trägermaterials beschreibenden Parameter. Der mindestens eine Trägermaterialparameter (vorzugsweise ist eine Mehrzahl vorgesehen) kann ausgewählt sein aus der Gruppe, umfassend:
- Trägermaterialsorte,
- Oberflächeneigenschaften des Trägermaterials,
- Oberflächenstruktur des Trägermaterials,
- Flächengewicht des Trägermaterials,
- Porosität des Trägermaterials,
- Inhaltsstoffe des Trägermaterials (und/oder Farbannahmeverhalten),
- Feuchte des Trägermaterials,
- Farbe des Trägermaterials,
- Dehnungsverhalten des Trägermaterials in Bezug auf eine Weiterverarbeitung (z.B. bei Verwendung für Synchronporen),
- Schichtaufbau des Trägermaterials (z.B. Farbempfangsschicht, Art und Anzahl der Funktionsschichten),
- durchgeführte Vorbehandlung des Trägermaterials.

Beispielsweise kann die Trägermaterialsorte bzw. ein bestimmter Trägertyp, also ein bestimmter zu bedruckender Träger (z.B. bestimmte Dekorrohpapiersorte), angegeben sein. Dies ist insbesondere dann von Vorteil, wenn eine Mehrzahl an unterschiedlichen Dekorrohpapiersorten grundsätzlich für den Druckprozess zur Verfügung steht.

Alternativ oder zusätzlich können Angaben zur Oberflächenstruktur, Oberflächeneigenschaften des Trägermaterials, wie die Oberflächenenergie, zum Flächengewicht, zu den Inhaltsstoffen, zum Schichtaufbau, zur Porosität, zur Feuchte des Trägermaterials, zur Farbe des Trägermaterials, zum Dehnungsverhalten und/oder zu Vorbehandlungen angegeben sein. Es versteht sich, dass die vorgenannten Parameter nur Beispiele sind und nicht abschließend sind.

Der Druckfarbeparameterdatensatz kann mindestens einen Druckfarbeparameter umfassen. Ein Druckfarbeparameter meint insbesondere einen die Qualität der Druckfarbe, insbesondere der Tinte, beschreibenden Parameter. Der mindestens eine Druckfarbeparameter (vorzugsweise ist eine Mehrzahl vorgesehen) kann ausgewählt sein aus der Gruppe, umfassend:
- Druckfarbesorte, insbesondere Tintensorte,
- Art der eingesetzten Farbmittel (Farbstoffe oder Farbpigmente),
- Partikelgröße der Farbpigmente,
- Bindemittel der Druckfarbe (z.B. wasserlösliche oder wasserdispergierbare Polymere als Bindemittel),
- Additive der Druckfarbe,
- Rheologische Eigenschaften der Druckfarbe (Viskosität),
- Farbe bzw. Farbdichte der Druckfarbe/der Tinte als solche,
- Rezeptur der Druckfarbe,
- Oberflächenspannung.

Beispielsweise kann die Druckfarbesorte bzw. ein bestimmter Druckfarbetyp, also eine bestimmte Druckfarbe, insbesondere Tintensorte, angegeben sein. Dies ist insbesondere dann von Vorteil, wenn eine Mehrzahl an unterschiedlichen Druckfarbesorten, insbesondere Tintensorten, grundsätzlich für den Druckprozess zur Verfügung steht. Alternativ oder zusätzlich können weitere Druckfarbeparameter angegeben sein. Es versteht sich, dass die vorgenannten Parameter nur Beispiele sind und nicht abschließend sind.

Der Druckmaschinensteuerparameterdatensatz kann mindestens einen Druckmaschinensteuerparameter umfassen. Der mindestens eine Druckmaschinensteuerparameter kann ausgewählt sein aus der Gruppe, umfassend:
- Druckmaschinentyp,
- Druckgeschwindigkeit,
- Walzendruck,
- Bahnspannung,
- Synchronisierung von Druck zu Bahngeschwindigkeit,
- Einsatz von Primern (Art und Menge und Auftragsverfahren und Trocknung)
- Tropfengröße der aufzubringenden Druckfarbe,
- Tropfenfrequenz,
- Trocknungseinstellungen (Temperatur, Strahlungsintensität, Luftmenge/Luftgeschwindigkeit etc.)
- Elektrostatik (auf- oder entladen).

Beispielsweise kann der Druckmaschinentyp, also insbesondere eine bestimmte Druckmaschine, angegeben sein. Dies ist insbesondere dann von Vorteil, wenn eine Mehrzahl an unterschiedlichen Druckmaschinen grundsätzlich für den Druckprozess zur Verfügung steht.

Alternativ oder zusätzlich kann der Druckmaschinensteuerparameterdatensatz mindestens einen an der Druckmaschine einstellbaren Parameter umfassen. Die Parameter können beispielsweise Einstellmöglichkeiten an einem Druckkopf einer (bestimmten) Druckmaschine betreffen, wie die Tropfengröße (bzw. Tröpfchengröße) der aufzubringenden Druckfarbe oder die Frequenz, mit der die Tropfen aufgebracht werden, also die Tropfenfrequenz (bzw. Tröpfchenfrequenz). Auch kann an einer Druckmaschine eine Einstellung von Trocknungsparametern (z.B. Temperatur, Strahlungsintensität, Luftmenge/Luftgeschwindigkeit etc.) und/oder Vorbehandlungsparametern (z.B. auf- oder entladen) erfolgen. Die Temperatur der Tinte und/oder Verhältnisse zwischen den verschiedenen Farben und Tintenauftragsmengen können einstellbar sein. Auch die Bahnspannung und/oder die Synchronisierung von Druck zu Bahngeschwindigkeit kann eingestellt werden. Es versteht sich, dass die vorgenannten Parameter nur Beispiele sind und nicht abschließend sind. Beispielsweise können andere Vorbehandlungen und oder maschinentypspezifische Parameter berücksichtigt werden.

Gemäß einer bevorzugten Ausführungsform des anmeldungsgemäßen Verfahrens kann das Verfahren ferner umfassen:
- Vorgeben mindestens eines Trägermaterialparameters eines in dem Druckprozess zu verwendenden Trägers, insbesondere mindestens einer Trägermaterialsorte,
- wobei das Simulieren des Druckprozesses in dem Simulationsschritt auf dem vorgegebenen Trägermaterialparameter basiert.

Insbesondere für den Fall, dass nur eine bestimmte (beschränkte) Anzahl unterschiedlicher Träger von einer Gesamtzahl an grundsätzlich möglichen unterschiedlichen Trägern für einen Druckprozess verfügbar ist, können diese für den Simulationsprozess bzw. den mindestens einen Simulationsschritt vorgegeben werden. Wenn beispielsweise nur ein Träger bzw. eine Trägermaterialsorte vorrätig ist und damit nur dieser eine Träger in dem durchzuführenden Druckprozess eingesetzt werden kann, kann dieser für den Simulationsprozess vorgegeben werden. Dies bedeutet in diesem Beispiel insbesondere, dass die Trägermaterialparameter fest vorgegeben sind und nicht variiert werden können.

Alternativ oder zusätzlich kann das Verfahren umfassen:
- Vorgeben mindestens eines in dem Druckprozess zu verwendenden Druckfarbeparameters, insbesondere mindestens einer Druckfarbesorte,
- wobei das Simulieren des Druckprozesses in dem Simulationsschritt auf dem vorgegebenen Druckfarbeparameter basiert,

Insbesondere für den Fall, dass nur eine bestimmte (beschränkte) Anzahl unterschiedlicher Druckfarben, insbesondere Tinten, von einer Gesamtzahl an grundsätzlich möglichen unterschiedlichen Druckfarben bzw. Druckfarbesorten für einen Druckprozess verfügbar ist, können diese für den Simulationsprozess bzw. den mindestens einen Simulationsschritt vorgegeben werden. Wenn beispielsweise nur eine Tinte bzw. Tintensorte vorrätig ist und damit nur diese eine Tinte in dem durchzuführenden Druckprozess eingesetzt werden kann, kann diese für den Simulationsprozess vorgegeben werden. Dies bedeutet in diesem Beispiel insbesondere, dass die Druckfarbeparameter fest vorgegeben sind und nicht variiert werden können.

Alternativ oder zusätzlich kann das Verfahren umfassen:
- Vorgeben mindestens eines in dem Druckprozess zu verwendenden Druckmaschinensteuerparameters, insbesondere mindestens eines Druckmaschinentyps,
- wobei das Simulieren des Druckprozesses in dem Simulationsschritt auf dem vorgegebenen Druckmaschinensteuerparameter basiert.

Insbesondere für den Fall, dass nur eine bestimmte (beschränkte) Anzahl unterschiedlicher Druckmaschinen von einer Gesamtzahl an grundsätzlich möglichen unterschiedlichen Druckmaschinen für einen Druckprozess verfügbar ist, können diese für den Simulationsprozess bzw. den mindestens einen Simulationsschritt vorgegeben werden. Wenn beispielsweise nur eine Druckmaschine für den Druckprozess verfügbar ist und damit nur diese eine Druckmaschine in dem durchzuführenden Druckprozess eingesetzt werden kann, kann diese für den Simulationsprozess vorgegeben werden. Dies bedeutet in diesem Beispiel insbesondere, dass Druckmaschinensteuerparameter nur in dem Rahmen eingestellt und variiert werden können, wie es an der vorgegebenen Druckmaschine möglich ist.

In einem bevorzugten Ausführungsbeispiel können die Druckmaschine, der Träger und die Tinte vorgegeben sein. Durch den Simulationsprozess werden dann als Parameter des Druckprozessparameterdatensatzes die Drucksteuerparameter ermittelt, die an der vorgegebenen Druckmaschine für den vorgegebenen Träger und die vorgegeben Tinte sowie einem bereitgestellten Dekorzielbild das beste (abhängig vom Überprüfungsergebnis) Druckergebnis versprechen.

Gemäß einer weiteren Ausführungsform des anmeldungsgemäßen Verfahrens kann basierend auf dem mindestens einen vorgegebenen Trägermaterialparameter eine Zuordnung zu einer vorgegebenen Trägerklassifikation aus einer Mehrzahl von vorgegebenen Trägerklassifikationen erfolgen.

Alternativ oder zusätzlich kann basierend auf dem mindestens einen vorgegebenen Druckfarbeparameter eine Zuordnung zu einer vorgegebenen Druckfarbeklassifikation aus einer Mehrzahl von vorgegebenen Druckfarbeklassifikationen erfolgen. Insbesondere kann ein Datenspeicher bzw. eine Datenbank vorgesehen sein, in dem/r eine Vielzahl von Druckfarbeklassifikation jeweils mit bestimmten Druckfarbeparametern gespeichert ist.

Beispielsweise kann eine solche Klassifikation vorab anhand verfügbarer Druckfarben erfolgen. Wenn mindestens ein, vorzugsweise eine Mehrzahl von Druckfarbeparameter/n, wie Farbmitteltyp, Pigmentgröße, Füllstoffe, Additive, Färbung und/oder Rezeptur vorgegeben werden, kann eine Zuordnung zu einer vorgegebenen Druckfarbeklassifikation, insbesondere anhand eines Vergleichs der jeweiligen Parameterwerte, erfolgen (insbesondere kann die Druckfarbeklassifikation ausgewählt werden, die den bereitgestellten mindestens einen Druckfarbeparameter am nächsten kommt). In entsprechender Weise kann bei Trägermaterialparametern vorgegangen werden. Insbesondere kann durch die Klassifikation in dem anschließend durchzuführenden Simulationsprozess ein zu verwendender Druckprozessparameterdatensatz in geringer Zeit ermittelt werden.

Gemäß des anmeldungsgemäßen Verfahrens umfasst das Überprüfen des erstellten digitalen Dekorbilds ein Vergleichen des durch den Simulationsschritt erstellten digitalen Dekorbilds und des Dekorzielbilds. Vorzugsweise kann für die Durchführung des Vergleichs Bild-Bild-Vergleichsverfahren eingesetzt werden, wie der PTS (Papiertechnische Stiftung)-Domas Software (digital optisches Mess- und Analyse System).

Das mindestens eine Überprüfungskriterium ist ein Vergleichskriterium, das mindestens ein bestimmtes optisches Mindestähnlichkeitsmaß (z.B. ein vorgegebener Zielwert hinsichtlich des Farbortes und/oder der Farbdichte/optische Dichte sowie weiterer Qualitätsparameter, wie Linienschärfe, Koaleszenz, ColourBleed, Auflösung, Glanzgrad, Bronzing, Color Matching, Smoothcheck, Hauttöne und/oder Metamerie) zwischen dem durch den Simulationsschritt erstellten digitalen Dekorbild und dem Dekorzielbild vorgibt. Insbesondere kann das Vergleichskriterium vorgegeben werden, um eine bestimmte Mindestähnlichkeit, die zu erfüllen ist, festzusetzen. Das Mindestähnlichkeitsmaß kann beispielsweise (von einem Anwender) zwischen einem minimalen Grenzwert und einem maximalen Grenzwert (der z.B. Identität verlangt) einstellbar sein. Während durch eine Einstellung des Mindestähnlichkeitsmaßes in der Nähe zum minimalen Grenzwert die Zeitdauer des Simulationsprozesses reduziert werden kann, kann durch eine Einstellung des Mindestähnlichkeitsmaßes in der Nähe zum maximalen Grenzwert das Simulationsergebnis verbessert werden.

Wie bereits beschrieben wurde, kann gemäß einer bevorzugten Ausführungsform des anmeldungsgemäßen Verfahrens, wenn das Überprüfungskriterium nicht erfüllt ist, der Simulationsschritt erneut ausgeführt werden. Mindestens ein Parameter des Druckprozessparameterdatensatzes kann im Vergleich zu dem im vorherigen Simulationsschritt verwendeten Druckprozessparameterdatensatz geändert sein. Insbesondere können während des Simulationsprozesses so lange Simulationsschritte durchgeführt werden, bis das Überprüfungskriterium, insbesondere das zuvor beschriebene Vergleichskriterium, erfüllt ist.

Gemäß einer besonders bevorzugten Ausführungsform des anmeldungsgemäßen Verfahrens können die gespeicherten historischen Druckdatensätze eine Mehrzahl von gespeicherten Verknüpfungen zwischen jeweils einem Trägermaterialparametersatz, einem Druckfarbeparameterdatensatz, einem Druckmaschinensteuerdatensatz und einem basierend auf den verknüpften Datensätzen gedruckten Dekorbild umfassen, das insbesondere als digitales Druckdekorbild gespeichert sein kann.

Eine Verknüpfung meint insbesondere, dass eine bestimmte Beziehung zwischen zwei Datensätzen und/oder einzelnen Parametern aus den Datensätzen besteht, die in der Recheneinrichtung gespeichert ist. Eine Verknüpfung kann insbesondere eine Wechselwirkung zwischen mindestens einem Druckmaschinensteuerparameter und mindestens einem Druckfarbeparameter und/oder mindestens einem Druckmaschinensteuerparameter und mindestens einem Trägermaterialparameter und/oder mindestens einem Druckfarbeparameter und mindestens einem Trägermaterialparameter abbilden. Eine Beziehung kann durch einen mathematischen Algorithmus abgebildet sein. Beispielsweise kann eine Mehrzahl von derartigen Beziehungen gespeichert sein. So kann eine Beziehung zwischen einem ersten Datensatz (beispielsweise ein Trägermaterialparametersatz) und einem zweiten Datensatz (beispielsweise ein Druckfarbeparameterdatensatz) gespeichert sein. Diese Beziehung kann wiederum mit einem dritten Datensatz (in dem genannten Beispiel ein Druckmaschinensteuerdatensatz) verknüpft sein. Hierzu kann das resultierende (in einem tatsächlich ausgeführten Druckschritt mit diesen Datensätzen gedruckte) Dekorbild (in digitaler Form) zugeordnet sein. In entsprechender Weise kann für eine Vielzahl von Datensätzen (Trägermaterialparametersatz, Druckfarbeparameterdatensatz, Druckmaschinensteuerdatensatz) jeweils mit mindestens einem geänderten Parameter die entsprechenden Beziehungen und Verknüpfungen gespeichert werden.

Die Mehrzahl von Verknüpfungen kann bevorzugt in Form eines Maschinenlernmoduls, besonders bevorzugt in Form eines künstlichen neuronalen Netzes oder einer Fuzzy-Logik gespeichert sein. Es versteht sich, dass andere Arten von Maschinenlernmodulen eingesetzt werden können.

Gemäß einer weiteren Ausführungsform des anmeldungsgemäßen Verfahrens kann in dem Simulationsschritt, basierend auf der gespeicherten Mehrzahl von Verknüpfungen und zumindest dem zu druckenden Dekorzielbild, vorzugsweise zusätzlich basierend auf mindestens einem vorgegebenen Trägermaterialparameter und/oder mindestens einem vorgegebenen Druckfarbeparameter und/oder mindestens einem vorgegebenen Druckmaschinensteuerparameter, das digitale Dekorbild erstellt werden. Insbesondere kann der Simulationsprozess mit einer Mehrzahl von Simulationsschritten unter Verwendung des Maschinenlernmoduls bzw. KI-Moduls ausgeführt werden.

Darüber hinaus kann, gemäß einer weiteren Ausführungsform des anmeldungsgemäßen Verfahrens, die gespeicherte Mehrzahl von Verknüpfungen während eines Anlernprozesses generiert werden. Insbesondere können eine Vielzahl von Druckprozessen durchgeführt und die jeweils verwendeten Datensätzen (Trägermaterialparametersatz, Druckfarbeparameterdatensatz, Druckmaschinensteuerdatensatz) und das gedruckte Dekorbild aufgezeichnet werden. Insbesondere kann hierdurch ein vorgenanntes Maschinenlernmodul angelernt werden.

Wie bereits beschrieben wurde, kann gemäß einer Ausführungsform des anmeldungsgemäßen Verfahrens die gespeicherte Mehrzahl von Verknüpfungen in Form eines neuronalen Netzes vorliegen (andere Technologien sind denkbar, wie z.B. die Fuzzy-Technologie).

Vorzugsweise umfasst das Verfahren ferner:
- Durchführen des Druckprozesses in einem Druckschritt, durch eine Druckmaschine, basierend auf dem ausgegebenen Druckprozessparameterdatensatz, derart, dass ein gedrucktes Dekorbild auf dem Träger erstellt wird.

Insbesondere kann eine Druckmaschine mit dem Druckprozessparameterdatensatz direkt von einem Steuermodul der Recheneinrichtung angesteuert werden.

Gemäß einer bevorzugten Ausführungsform des anmeldungsgemäßen Verfahrens kann das Verfahren ferner umfassen:
- Überprüfen des gedruckten Dekorbilds, basierend auf dem Dekorzielbild und mindestens einem Druckqualitätskriterium, und
- wenn das Druckqualitätskriterium nicht erfüllt ist, erneutes Ausführen des Druckschritts,
- wobei mindestens ein Parameter des Druckprozessparameterdatensatzes im Vergleich zu dem im vorherigen Druckschritt verwendeten Druckprozessparameterdatensatz geändert ist.

Das Überprüfen des entsprechend einem ermittelten Druckprozessparameterdatensatz gedruckten Dekorbilds kann insbesondere ein Vergleichen zwischen dem gedruckten Dekorbild und dem Dekorzielbild sein. Beispielsweise kann das gedruckte Dekorbild für die Überprüfung, insbesondere den Vergleich, digitalisiert werden. Dann kann in vorbeschriebener Weise ein Vergleich durchgeführt werden. Insbesondere kann das mindestens eine Druckqualitätskriterium ein Vergleichskriterium sein, das mindestens ein bestimmtes optisches Mindestähnlichkeitsmaß (z.B. ein vorgegebener Zielwert hinsichtlich des Farbortes und/oder der Farbdichte sowie weitere Qualitätsparameter) zwischen den genannten Bildern vorgibt.

Wenn das Druckqualitätskriterium nicht erfüllt ist, kann der Druckschritt erneut ausgeführt werden, wobei mindestens ein Parameter des Druckprozessparameterdatensatzes im Vergleich zu dem im vorherigen Druckschritt verwendeten Druckprozessparameterdatensatz geändert ist. Zusätzlich kann vorgesehen sein, dass vor dem Ausführen eines erneuten Druckschritts zunächst erneut ein Simulationsprozess durchgeführt wird, bei dem insbesondere zusätzlich die Daten des durchgeführten Druckschritts berücksichtigt werden.

Es sei angemerkt, dass, wie beschrieben, es trotz einer Durchführung eines Simulationsprozesses dazu kommen kann, dass das erste Druckergebnis keine optimale Qualität besitzt. Jedoch stellt der in dem Simulationsprozess ermittelte Druckprozessparameterdatensatz einen optimaleren Ausgangspunkt da, so dass die Anzahl von Testdrucken zumindest reduziert wird.

Gemäß einer bevorzugten Ausführungsform des anmeldungsgemäßen Verfahrens können die gespeicherten historischen Druckdatensätze (insbesondere die genannten Verknüpfungen, insbesondere bevorzugt das Maschinenlernmodul), aktualisiert werden, basierend auf dem in einem Druckschritt verwendeten Druckprozessparameterdatensatz und dem in dem Druckschritt gedruckten Dekorbild. Insbesondere können sämtliche Daten eines jeweils durchgeführten Druckprozesses (Trägermaterialparameter, Druckfarbeparameter, Druckmaschinensteuerparameter, gedrucktes Dekorbild und/oder simuliertes digitales Dekorbild) erfasst werden. Mit diesen Daten kann im laufenden Betrieb die Genauigkeit des Simulationsprozesses verbessert werden. Insbesondere kann ein Rückkopplungskanal von der Druckmaschine zu der Recheneinrichtung vorgesehen sein. Hierdurch kann vorzugsweise eine automatische Rückkopplung der Daten und damit insbesondere ein Lernen im laufenden Betrieb ermöglicht werden.

Gemäß einer weiteren Ausführungsform des anmeldungsgemäßen Verfahrens kann das Verfahren ferner umfassen:
- Vergleichen des Dekorzielbilds mit gespeicherten gedruckten Dekorbildern vor der Durchführung des Simulationsschritts,
- Bestimmen des gedruckten Dekorbilds, welches die größte Ähnlichkeit mit dem Dekorzielbild aufweist, und
- Ausgeben des mit dem bestimmten gedruckten Dekorbilds verknüpften Druckprozessparameterdatensatzes und/oder Starten des Simulationsschritts, basierend dem mit dem bestimmten gedruckten Dekorbild verknüpften Druckprozessparameterdatensatz.

Tatsächlich durchgeführte Druckprozesse, insbesondere die tatsächlich gedruckten Dekorbilder zusammen mit dem jeweiligen Druckprozessparameterdatensatz, können vorzugsweise erfasst und insbesondere in einem Datenspeicher gespeichert werden. Insbesondere vor dem Durchführen eines Simulationsschritts kann geprüft werden, ob das bereitgestellte und insbesondere gewünschte Dekorzielbild bereits in der Vergangenheit gedruckt wurde.

Vorzugsweise kann ein (zuvor beschriebener) Vergleich zwischen dem bereitgestellten Dekorzielbild und den gespeicherten gedruckten Dekorbildern durchgeführt werden. Insbesondere kann das gespeicherte Dekorbild mit der größten Ähnlichkeit bestimmt werden. Insbesondere bei Vorliegen einer Identität (oder hochgradigen Ähnlichkeit) zwischen den genannten Bildern, kann der Simulationsprozess entfallen und insbesondere der mit dem bestimmten Dekorbild verknüpfte (historische) Druckprozessparameterdatensatz ausgegeben werden. Entsprechend diesem Druckprozessparameterdatensatz kann dann der Druckschritt ausgeführt werden.

Wenn keine Identität (oder hochgradige Ähnlichkeit) vorliegt, kann jedoch vorzugsweise die Ausführung des Simulationsschritts zusätzlich auf dem Druckprozessparameterdatensatz des gespeicherten Dekorbilds mit der höchsten Ähnlichkeit basieren, insbesondere als Ausgangspunkt eines Simulationsprozesses dienen.

Ein weiterer Aspekt der Anmeldung ist ein Computerprogramm(-produkt), umfassend Befehle, die bei der Ausführung des Computerprogramms durch einen Prozessor diesen veranlassen, das zuvor beschriebene Verfahren auszuführen.

Das Computerprogramm umfasst insbesondere Softwarecode, der so angepasst ist, dass, wenn der Softwarecode durch einen Prozessor einer Recheneinrichtung ausgeführt wird, das zuvor beschriebene Verfahren durchgeführt wird.

Ein noch weiterer Aspekt der Anmeldung ist ein computerlesbarer Datenträger, auf dem das zuvor beschriebene Computerprogramm gespeichert ist.

Das Computerprogramm, insbesondere die Instruktionen bzw. Programmanweisungen, können auf bzw. in einem Datenträger einer Recheneinrichtung gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Recheneinrichtung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Recheneinrichtung kann beispielsweise Zwischenergebnisse oder Ähnliches in dem Hauptspeicher speichern.

Ein noch weiterer Aspekt der Anmeldung ist ein Dekordrucksystem (insbesondere ein Dekordrucksystem mit mindestens einer Recheneinrichtung), umfassend:
- mindestens ein Empfangsmodul, eingerichtet zum Bereitstellen eines in einem Druckprozess zu druckenden Dekorzielbilds durch mindestens einen Dekorparameterdatensatz,
- mindestens ein Simulationsmodul, eingerichtet zum Simulieren des Druckprozesses in einem Simulationsschritt, basierend auf dem bereitgestellten Dekorparameterdatensatz, mindestens einem Druckprozessparameterdatensatz und gespeicherten historischen Druckdatensätzen, derart, dass ein digitales Dekorbild erstellt wird,
- mindestens ein Überprüfungsmodul, eingerichtet zum Überprüfen des erstellten digitalen Dekorbilds, basierend auf dem zu druckenden Dekorbild und mindestens einem Überprüfungskriterium,
   - wobei das Überprüfen des erstellten digitalen Dekorbilds ein Vergleichen des durch den Simulationsschritt erstellten digitalen Dekorbilds und des Dekorzielbilds umfasst,
   - wobei das mindestens eine Überprüfungskriterium ein Vergleichskriterium ist, das mindestens ein bestimmtes optisches Mindestähnlichkeitsmaß zwischen dem durch den Simulationsschritt erstellten digitalen Dekorbild und dem Dekorzielbild vorgibt, und
- mindestens ein Ausgabemodul, eingerichtet zum Ausgeben des in dem Simulationsschritt verwendeten Druckprozessparameterdatensatzes, wenn das Überprüfungskriterium erfüllt ist.

Wie bereits beschrieben wurde, kann das Dekordrucksystem mindestens eine Recheneinrichtung umfassen, welche die vorgenannten Module umfasst. Ferner kann mindestens ein Datenspeicher vorgesehen sein, um die gespeicherten Daten (z.B. historische Druckdatensätze, Klassifikationen etc.) zu speichern. Ferner kann das Dekordrucksystem mindestens eine Druckmaschine umfassen. Die Druckmaschine kann vorzugsweise ein Ink-Jet-Druckmaschine sein.

Die mindestens eine Recheneinrichtung kann in einem Backendsystem (z.B. gebildet durch einen oder mehrere (verteilt angeordnete) Server) implementiert sein, welches das Empfangsmodul, das Simulationsmodul, das Überprüfungsmodul und das Ausgabemodul umfassen kann. Das Dekordrucksystem kann mit einer Mehrzahl von Druckmaschinen kommunikativ verbindbar sein (und diese nicht selbst umfassen).

Wie bereits beschrieben wurde, kann das Dekordrucksystem bei anderen Varianten auch diese Druckmaschinen umfassen.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Computerprogramme, Datenträger und Dekordrucksysteme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, das anmeldungsgemäße Computerprogramm, den anmeldungsgemäßen Datenträger und das anmeldungsgemäße Dekordrucksystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Dekordrucksystems gemäß der vorliegenden Anmeldung,
- Fig. 2: ein Diagramm eines Ausführungsbeispiels eines Verfahrens gemäß der vorliegenden Anmeldung, und
- Fig. 3: eine schematische Ansicht eines Ausführungsbeispiels eines weiteren Dekordrucksystems gemäß der vorliegenden Anmeldung.

Nachfolgend werden für gleiche Elemente gleiche Bezugszeichen verwendet.

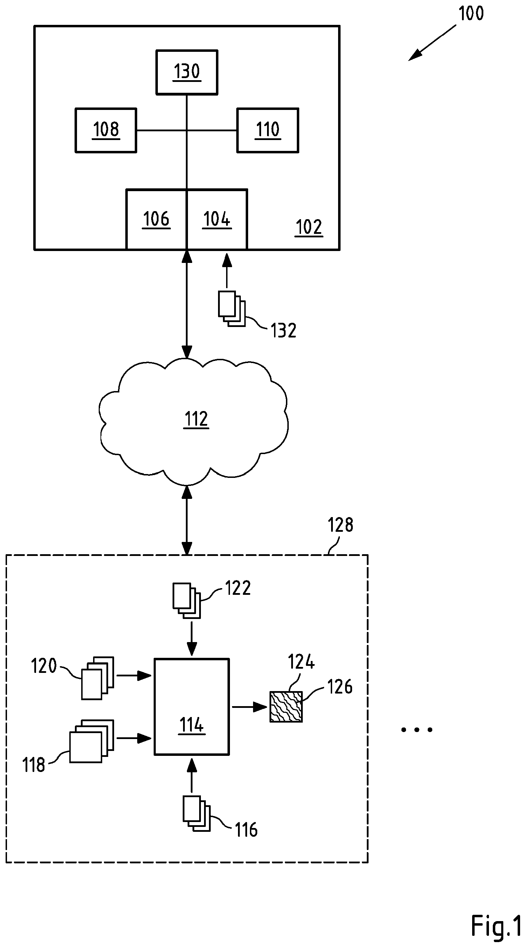

Die Figur 1 zeigt eine schematische Ansicht eines Ausführungsbeispiels eines Dekordrucksystems 100 gemäß der vorliegenden Anmeldung. Wie zu erkennen ist, ist vorliegend eine Recheneinrichtung 102 und mindestens eine Druckanordnung 128 mit mindestens einer Druckmaschine 114 vorgesehen. Die Druckmaschine 114 kann insbesondere eine digitale Dekordruckmaschine 114, vorzugsweise eine Ink-Jet-Druckmaschine 114, sein. Es versteht sich, dass eine Druckanordnung eine Mehrzahl von (unterschiedlichen) Druckmaschinen umfassen kann und/oder eine Mehrzahl von Druckanordnungen vorgesehen sein kann.

Das Dekordrucksystem 100 kann nur durch die Recheneinrichtung 102 gebildet sein oder, bei anderen Varianten der Anmeldung, auch die mindestens eine Druckanordnung 128, insbesondere die mindestens eine Druckmaschine 114 umfassen. Die Recheneinrichtung 102 kann beispielsweise in einem Backendsystem 102 (gebildet durch einen oder mehrere (verteilte) Server) implementiert sein. Die Recheneinrichtung 102 kann entfernt von der Druckanordnung 128 angeordnet sein und insbesondere über ein Kommunikationsnetz 112 mit der Druckanordnung 128 verbindbar sein. Bei anderen Varianten kann die Recheneinrichtung auch lokal an der Druckanordnung angeordnet sein und beispielsweise über ein lokales Kommunikationsnetz verbindbar sein.

In der Figur 1 ist schematisch angedeutet, dass die Druckmaschine 114 (grundsätzlich) mit verschiedenen Trägern 118, also insbesondere verschiedenen Dekorrohpapieren 118 bzw. Dekorrohpapiersorten 118, und verschiedenen Druckfarben 120 bzw. Druckfarbesorten, insbesondere verschiedenen Tinten 120, betrieben werden kann. Ferner können verschiedene Druckmaschinensteuerparameter 116 (beispielsweise jeweils zwischen einem minimalen und einem maximalen Grenzwert) eingestellt werden. Die Druckmaschine 114 ist eingerichtet, einen Druckschritt durchzuführen, abhängig von einem bereitgestellten Druckprozessparameterdatensatz 122. Das Druckergebnis ist ein Druckerzeugnis in Form eines Trägers 124 mit einem aufgedruckten Dekorbild 126.

Das Druckerzeugnis kann dann wiederum auf eine weitere Unterlage aufgebracht werden, wie eingangs beschrieben wurde.

Die Recheneinrichtung 102 kann ein Empfangsmodul 104, ein Ausgabemodul 106, ein Simulationsmodul 108, ein Überprüfungsmodul 110 und einen Datenspeicher 130 umfassen. Auch kann ein (gemeinsames) bidirektionales Kommunikationsmodul vorgesehen sein, um das Empfangs- und das Ausgabemodul zu bilden.

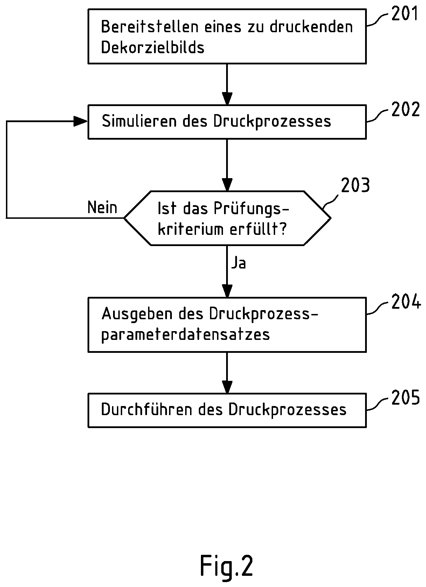

Die Funktionsweise des Dekordrucksystems 100 wird nachfolgend mit Hilfe der Figur 2 näher erläutert. Die Figur 2 zeigt ein Diagramm eines Ausführungsbeispiels eines Verfahrens gemäß der vorliegenden Anmeldung.

In einem Schritt 201 erfolgt ein Bereitstellen des in dem Druckprozess zu druckenden Dekorzielbilds durch mindestens einen Dekorparameterdatensatz. Insbesondere ist das mindestens eine Empfangsmodul 104 eingerichtet zum Bereitstellen eines in einem Druckprozess zu druckenden Dekorzielbilds 132 durch mindestens einen Dekorparameterdatensatz. Beispielsweise kann über das Empfangsmodul 104 ein Dekorparameterdatensatz 132 der Recheneinrichtung 102 (beispielsweise in Form einer Datei) bereitgestellt werden. Das Empfangsmodul 104 kann das zu druckende Dekorzielbild 132, insbesondere den entsprechenden Dekorparameterdatensatz, dem Simulationsmodul 108 zur Verfügung stellen.

In einem Simulationsschritt 202 erfolgt ein Simulieren des Druckprozesses, basierend auf dem Dekorparameterdatensatz, mindestens einem Druckprozessparameterdatensatz und gespeicherten historischen Druckdatensätzen, derart, dass ein digitales Dekorbild erstellt wird.

Insbesondere ist das mindestens eine Simulationsmodul 108 eingerichtet zum Simulieren des Druckprozesses in dem Simulationsschritt 202, basierend auf dem bereitgestellten Dekorparameterdatensatz, mindestens einem Druckprozessparameterdatensatz und gespeicherten historischen Druckdatensätzen, derart, dass ein digitales Dekorbild erstellt wird. Die gespeicherten historischen Druckdatensätzen können beispielsweise in Form eines Maschinenlernmoduls (welches das Simulationsmodul und/oder das Überprüfungsmodul bilden kann), vorzugsweise in Form eines neuronalen Netzwerks, gespeichert sein. In diesem Fall kann beispielsweise dem neuronalen Netzwerk als Eingangsparameter der Dekorparameterdatensatz bereitgestellt werden. Als Ausgangsparameter liefert dann das neuronale Netzwerk das simulierte digitale Dekorbild und den bei der Simulation verwendeten Druckprozessparameterdatensatz.

Vorzugsweise können in dem Simulationsschritt 202 weitere Vorgaben gemacht und z.B. dem neuronalen Netzwerk als Eingangsparameter zur Verfügung gestellt werden, beispielsweise die für den Druckprozess zur Verfügung stehenden Träger 118 bzw. Trägermaterialsorten, die zur Verfügung stehenden Druckfarben 120 bzw. Druckfarbesorten und/oder die zur Verfügung stehende Druckmaschine 114. Da im vorliegenden Beispiel nur eine Druckmaschine 114 vorgesehen ist, kann dies in der Simulation vorgegeben werden.

Das in dem Simulationsschritt 202 erstellte digitale Dekorbild kann anschließend überprüft werden. In Schritt 203 erfolgt ein Überprüfen, durch das Überprüfungsmodul 110, des erstellten digitalen Dekorbilds, basierend auf dem zu druckenden Dekorzielbild und mindestens einem Überprüfungskriterium. Insbesondere kann ein Vergleichen des in dem Simulationsschritt 202 erstellten digitalen Dekorbilds und des Dekorzielbilds durchgeführt werden. Erfüllt das Vergleichsergebnis das Überprüfungskriterium, insbesondere ein Vergleichskriterium, das mindestens ein bestimmtes optisches Mindestähnlichkeitsmaß (z.B. ein vorgegebener Zielwert hinsichtlich des Farbortes und/oder der Farbdichte sowie weitere Qualitätsparameter) zwischen dem durch den Simulationsschritt erstellten digitalen Dekorbild und dem Dekorzielbild vorgibt, dann kann mit Schritt 204 fortgefahren werden. Bei einer Variante kann der Schritt ein Subschritt des Schritts 202 sein.

In Schritt 204 erfolgt ein Ausgeben, durch das Ausgabemodul 106, des in dem Simulationsschritt 202 verwendeten Druckprozessparameterdatensatzes zum Durchführen des Druckprozesses, wenn das Überprüfen in Schritt 203 ergibt, dass das Überprüfungskriterium erfüllt ist. Insbesondere kann der Druckprozessparameterdatensatz an die Druckanordnung 128 übertragen werden und beispielsweise direkt von der Recheneinrichtung 102 angesteuert werden. Es versteht sich, dass Zwischenschritte vorgesehen sein können, wie eine Freigabe des Druckprozesses durch einen Anwender.

In Schritt 205 kann der Druckprozess, insbesondere der Druckschritt, durchgeführt bzw. ausgeführt werden. Insbesondere kann der Druckschritt basierend auf dem ausgegebenen Druckprozessparameterdatensatz durchgeführt werden, derart, dass ein gedrucktes Dekorbild 126 auf dem Träger 124 erstellt wird. Insbesondere kann abhängig von dem Druckprozessparameterdatensatz ein bestimmter Träger (insbesondere Trägermaterialsorte) und eine bestimmte Druckfarbe (insbesondere Druckfarbesorte) verwendet und an der Druckmaschine 114 einstellbare Druckmaschinensteuerparameter eingestellt werden.

Wenn das Überprüfungskriterium nicht erfüllt ist, kann der Simulationsschritt 202 erneut ausgeführt werden, wobei mindestens ein Parameter des Druckprozessparameterdatensatzes im Vergleich zu dem im vorherigen Simulationsschritt verwendeten Druckprozessparameterdatensatz geändert ist. Das Überprüfungsergebnis kann bei der Durchführung der Simulation, insbesondere bei der Änderung mindestens eines Parameters, berücksichtigt werden. Insbesondere können während des Simulationsprozesses so lange Simulationsschritte 202 (jeweils mit geänderten Parametern) durchgeführt werden, bis das Überprüfungskriterium, insbesondere das zuvor beschriebene Vergleichskriterium, erfüllt ist.

Das Verfahren kann in Form eines Computerprogramms vorliegen, welches von einem Prozessor der Recheneinrichtung 102 ausgeführt werden kann.

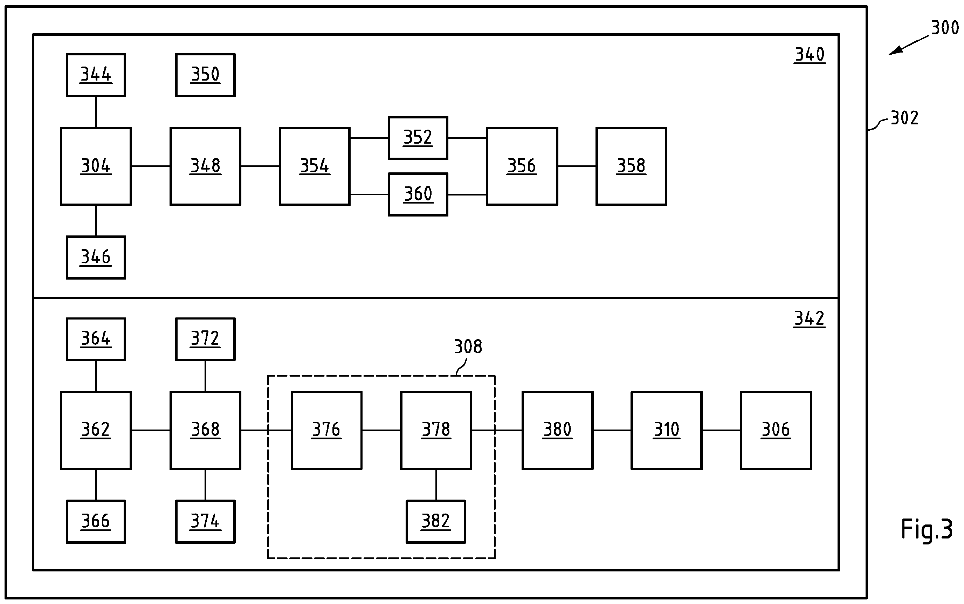

Die Figur 3 zeigt eine schematische Ansicht eines Ausführungsbeispiels eines weiteren Dekordrucksystems 300 gemäß der vorliegenden Anmeldung. Zur Vermeidung von Wiederholungen werden nachfolgend im Wesentlichen nur die Unterschiede zu dem Ausführungsbeispiel nach Figur 1 beschrieben und ansonsten auf die Ausführungen zu Figur 1 verwiesen.

Insbesondere ist schematisch eine Recheneinrichtung 302 dargestellt, die Hardware- und Softwaremodule aufweist, wobei die Softwaremodule insbesondere Teil des anmeldungsgemäßen Computerprogramm(produkts) sein können.

Insbesondere können vorliegend eine Konfigurationsanordnung 340 und eine Simulationsanordnung 342 vorgesehen sein. Als Empfangsmodul 304 kann die Konfigurationsanordnung 340 über eine Benutzerschnittstelle 304 verfügen. Die Benutzerschnittstelle 304 kann insbesondere eingerichtet sein, dass ein Nutzer/Anwender ein bestimmtes/gewünschtes Dekor(bild) erstellen und/oder anpassen kann. Insbesondere kann mittels der Benutzerschnittstelle 304 der Nutzer/Anwender die gewünschte optische Anmutung über die geeignete Auswahl von Dekorparametern, wie z.B. Farbgebung 344 oder optische Struktur 346, auswählen.

Die durch die Benutzerschnittstelle 304 detektierte Auswahl/Anpassung von Dekorparametern kann einem ersten Verknüpfungsmodul 348 bereitgestellt werden. Das Verknüpfungsmodul 348 kann eingerichtet sein, mittels mindestens einer vorgegebenen Verknüpfungsvorschrift 350 die bereitgestellte Auswahl in ein (visuelles) Dekorzielbild 352 und/oder einen entsprechenden Dekorparameterdatensatz zu überführen. Über ein Displaymodul 354 kann das zu druckende (visuelle) Dekorzielbild 352 dargestellt werden. Bei anderen Varianten kann der Dekorparameterdatensatz unmittelbar bereitgestellt werden.

Optional kann das Dekorzielbild 352 einem ersten Mustererkennungsmodul 356 bereitgestellt werden. Das Mustererkennungsmodul 356 ist mit einer Datenbank 358 bzw. einem Datenspeicher 358 verbunden, in der/dem insbesondere tatsächlich gedruckte Dekorbilder zusammen mit dem jeweiligen Druckprozessparameterdatensatz gespeichert sind. Das Mustererkennungsmodul 356 kann insbesondere eingerichtet sein, einen Vergleich zwischen dem Dekorzielbild 352 und den gespeicherten gedruckten Dekorbildern durchzuführen (wobei die gespeicherten Daten der Datenbank 358 über alle relevanten Parameter verfügen können). Das gedruckte Dekorbild 360 mit der größten Ähnlichkeit zum Dekorzielbild 352 kann bestimmt werden und insbesondere über Displaymodul 354 dargestellt werden.

Insbesondere für den Fall, dass das bestimmte gedruckte Dekorbild 360 (nahezu) identisch ist mit dem Dekorzielbild 352, kann der mit diesem Dekorbild 360 verknüpfte Druckprozessparameterdatensatz ausgegebenen werden und insbesondere in dem Druckprozess verwendet werden. Insbesondere wenn keine hinreichende Ähnlichkeit, also insbesondere keine Identität vorliegt, kann der Druckprozessparameterdatensatz optional in dem nachfolgend beschriebenen Simulationsprozess berücksichtigt werden.

Die Simulationsanordnung 342 kann eine weitere Benutzerschnittstelle 362 (bei einer Variante kann die gleiche Hardware-Benutzerschnittstelle verwendet werden, wie bei der Benutzerschnittstelle 304) aufweisen. Die weitere Benutzerschnittstelle 362 kann eingerichtet sein zum Vorgeben mindestens eines Trägermaterialparameters (insbesondere das mindestens eine für den Druckprozess verfügbare Dekorrohpapier bzw. -materialart) und/oder zum Vorgeben mindestens eines Druckfarbeparameters (insbesondere die mindestens eine für den Druckprozess verfügbare Tinte bzw. Tintenart) und/oder zum Vorgeben mindestens eines Druckmaschinensteuerparameters (insbesondere die mindestens eine für den Druckprozess verfügbare Druckmaschine bzw. Druckmaschinentyp).

Beispielsweise können ein elektronisches Auswahlformular zur Eingabe von Materialeigenschaften des Trägers und ein Auswahlformular zur Eingabe von Materialeigenschaften der Druckfarbe vorgesehen sein. Optional kann ein Klassifikationsmodul 368 vorgesehen sein.

Die Materialeigenschaften werden beispielsweise mittels eines ersten elektronischen Auswahlformulars hinterlegt, wobei die zur Beschreibung des Dekorrohpapiers notwendigen Informationen/Trägermaterialparameter, z.B. Flächengewicht, Oberflächeneigenschaften, Zusammensetzung der Inhaltsstoffe, Schichtaufbau (Farbempfangsschicht), Vorbehandlung in einer Datenbank 364 und die zur Beschreibung der Tinten notwendigen Informationen/Druckfarbeparameter, z.B. Farbmittel, Pigmentgröße, Bindemittel, Füllstoffe / Additive, Rezeptur etc., in einer weiteren Datenbank 366, hinterlegt sein können. Es versteht sich, dass ein Datenspeicher mit unterschiedlichen Partitionen für unterschiedliche Datenarten vorgesehen sein kann.

Bei einer Variante können die Materialeigenschaften eine Anzahl an Einzeldaten umfassen. Ein optionales Klassifikationsmodul 368 kann die in das elektronische Auswahlformular eingegebenen papierbeschreibenden Parameter zu einem Datensatz zusammensetzen und diesen einer hinterlegten Papierklassifikation 372 zuordnen. Das Klassifikationsmodul 368 kann ferner die in das elektronische Auswahlformular eingegebenen farbbeschreibenden Parameter zu einem Datensatz zusammenführen und diesen einer hinterlegten Farbklassifikation 374 zuordnen. Beispielsweise für den Fall, dass ein bestimmter Träger und/oder ein bestimmte Druckfarbe vorgegeben wird oder keine Vorgaben für Träger und Druckfarbe gemacht werden, kann die Klassifikation entfallen.

Ferner ist ein Simulationsmodul 308 vorgesehen, welches aus einer Mehrzahl von Einheiten gebildet sein kann (bei anderen Varianten jedoch auch durch nur eine Einheit, wie einem Maschinenlernmodul in Form eines neuronalen Netzes, Fuzzy-Logic oder dergleichen). Beispielsweise können eine Verknüpfungseinheit 376 und eine Simulationseinheit 378 vorgesehen sein. Vorliegend kann beispielsweise mittels des Simulationsmoduls 308 aus den Materialeigenschaften von Träger und Druckfarbe, welche insbesondere eine gewünschte / vorhandene Spezifikation des Dekorrohpapieres, also beispielsweise qualitätsbeschreibende Parameter, wie z.B. Oberflächenstrukturen, umfassen, und/oder eine gewünschte / vorhandene Spezifikation der Tinte bzw. Druckfarbe, also beispielsweise die Pigmentgröße, beschreiben, durch Simulation ein digitales Dekorbild erstellt werden. Insbesondere kann das digitale Dekorbild auf einem weiteren Bildschirmmodul 380 (dies kann auch das Modul 354 sein) angezeigt werden.

Vorzugsweise kann die Darstellung des digitalen Dekorbilds bzw. visuellen Erscheinungsbilds derart durchgeführt werden, dass eine konkret ausführbare und der Realität entsprechende Darstellung erstellt wird, so dass keine Notwendigkeit mehr besteht, die ausgegebenen Informationen (insbesondere den ausgegebenen Druckprozessparameterdatensatz) weiter zu detaillieren oder interpretieren.

Beispielsweise kann die Zuordnung des papierbeschreibenden Datensatzes bzw. Trägermaterialparametersatz (bzw. die entsprechende Klassifikation) zu dem farbbeschreibenden Datensatz bzw. Druckfarbeparameterdatensatz (bzw. die Farbklassifikation) durch die Verknüpfungseinheit 376 durchgeführt werden. Die Verknüpfungseinheit 376 kann beispielsweise auf Methoden der Mustererkennung, Fuzzy-Logic und/oder neuronale Netzwerke beruhen.

Die Simulationseinheit 378 simuliert insbesondere das digitale Dekorbild bzw. visuelle Erscheinungsbild mittels einer Mehrzahl von Verknüpfungen, insbesondere Verknüpfungsalgorithmen. Die auf historischen Druckdaten basierenden Verknüpfungsalgorithmen beschreiben insbesondere die Abbildung des visuellen Erscheinungsbildes in Abhängigkeit von unterschiedlichen Trägerparametern und Tintenparametern, beispielsweise von unterschiedlichen Papierklassifikationsklassen und unterschiedlichen Farbklassifikationsklassen.

Ferner kann die Simulationseinheit 378 das digitale Dekorbild bzw. visuelle Erscheinungsbild mittels Herstellungsverknüpfungsalgorithmen simulieren. Diese Herstellungsverknüpfungsalgorithmen beschreiben insbesondere die Abbildung des Dekorbilds bzw. visuellen Erscheinungsbildes in Abhängigkeit von Herstellungs- und Prozessstufen und deren Kombinatorik. Die Herstellungs- und Prozessstufen 382 können in Form von Maschinen- und Steuerparametern 382 hinterlegt sein. Dies meint insbesondere, dass Druckmaschinensteuerparameterdatensätze hinterlegt sein können.

Anders ausgedrückt kann in dem Simulationsprozess mit mindestens einem Simulationsschritt, basierend auf der gespeicherten Mehrzahl von Verknüpfungen und zumindest dem zu druckenden Dekorzielbild, vorzugsweise zusätzlich basierend auf mindestens einem vorgegebenen Trägermaterialparameter und/oder mindestens einem vorgegebenen Druckfarbeparameter und/oder mindestens einem vorgegebenen Druckmaschinensteuerparameter, das digitale Dekorbild erstellt werden. Insbesondere können als gespeicherte historische Druckdatensätze eine Mehrzahl von gespeicherten Verknüpfungen zwischen jeweils einem Trägermaterialparametersatz, einem Druckfarbeparameterdatensatz, einem Druckmaschinensteuerdatensatz und einem basierend auf den verknüpften Datensätzen gedruckten Dekorbild vorhanden sein, das insbesondere als digitales Druckdekorbild gespeichert sein kann.

Ein gespeichertes digitales Druckdekorbild kann allgemein durch Bildanalysen aus Vorgaben erstellt sein oder als Datensatz bereitgestellt werden, wobei physikalische Daten, wie Farbdichten, Schärfen u.a., erforderlich sein können.

Ferner ist ein Überprüfungsmodul 310 und ein Ausgabemodul 306 vorgesehen.

Das Überprüfungsmodul 310 kann beispielsweise eine Mustererkennungseinheit umfassen, welche das simulierte (visuelle) digitale Dekorbild mit dem (visuellen) Dekorzielbild vergleichen kann. Bei einer unzulässigen Übereinstimmung (welche in Form mindestens eines Überprüfungskriteriums definiert sein kann), kann der Simulationsschritt mit mindestens einem geänderten Parameter(wert) wiederholt werden.

Die verwendeten Verknüpfungen können von jedem Simulationsschritt dokumentiert werden und zur Aktualisierung der Verknüpfungen herangezogen werden. Die Mustererkennungseinheit kann sich eines Bild-Bild-Vergleichsverfahrens bedienen.

Anschließend kann das Ausgabemodul 306 eingerichtet sein zum Ausgeben des in dem Simulationsschritt verwendeten Druckprozessparameterdatensatzes zum Durchführen des Druckprozesses, wie zuvor beschrieben wurde.

Wie bereits beschrieben wurde, kann der Druckprozess, insbesondere der mindestens eine Druckschritt, überwacht und ausgewertet und zur Optimierung der historischen Druckdaten herangezogen werden.

Beispielsweise können während des Druckprozesses gemessene Qualitätsdaten mit den Simulationsdaten abgeglichen werden und zur Aktualisierung herangezogen werden. Insbesondere kann ein Maschinenlernmodul im laufenden Betrieb und basierend auf durchgeführten Druckschritten kontinuierlich weiter optimiert werden.

## Patentansprüche

1. Verfahren ausgeführt von mindestens einer Recheneinrichtung zur Steuerung eines Druckprozesses zum Drucken eines Dekorzielbilds auf einen Träger, umfassend:
- Bereitstellen des in dem Druckprozess zu druckenden Dekorzielbilds durch mindestens einen Dekorparameterdatensatz,
- Simulieren des Druckprozesses in einem Simulationsschritt, basierend auf dem Dekorparameterdatensatz, mindestens einem Druckprozessparameterdatensatz und gespeicherten historischen Druckdatensätzen, derart, dass ein digitales Dekorbild erstellt wird,
- Überprüfen des erstellten digitalen Dekorbilds, basierend auf dem zu druckenden Dekorzielbild und mindestens einem Überprüfungskriterium,
- wobei das Überprüfen des erstellten digitalen Dekorbilds ein Vergleichen des durch den Simulationsschritt erstellten digitalen Dekorbilds und des Dekorzielbilds umfasst,
- wobei das mindestens eine Überprüfungskriterium ein Vergleichskriterium ist, das mindestens ein bestimmtes optisches Mindestähnlichkeitsmaß zwischen dem durch den Simulationsschritt erstellten digitalen Dekorbild und dem Dekorzielbild vorgibt, und
- wenn das Überprüfungskriterium erfüllt ist, Ausgeben des in dem Simulationsschritt verwendeten Druckprozessparameterdatensatzes zum Durchführen des Druckprozesses.

2. Verfahren nach Anspruch 1, **dadurch gekennzeichnet, dass**
- der Druckprozessparameterdatensatz einen Trägermaterialparametersatz und/oder einen Druckfarbeparameterdatensatz und/oder einen Druckmaschinensteuerparameterdatensatz umfasst.

3. Verfahren nach einem der vorherigen Ansprüche, **dadurch gekennzeichnet, dass** das Verfahren ferner umfasst:
- Vorgeben mindestens eines Trägermaterialparameters eines in dem Druckprozess zu verwendenden Trägers, insbesondere mindestens einer Trägermaterialsorte,
- wobei das Simulieren des Druckprozesses in dem Simulationsschritt auf dem vorgegebenen Trägermaterialparameter basiert,
und/oder
- Vorgeben mindestens eines in dem Druckprozess zu verwendenden Druckfarbeparameters, insbesondere mindestens einer Druckfarbesorte,
- wobei das Simulieren des Druckprozesses in dem Simulationsschritt auf dem vorgegebenen Druckfarbeparameter basiert,
- Vorgeben mindestens eines in dem Druckprozess zu verwendenden Druckmaschinensteuerparameters, insbesondere mindestens eines Druckmaschinentyps,
- wobei das Simulieren des Druckprozesses in dem Simulationsschritt auf dem vorgegebenen Druckmaschinensteuerparameter basiert.

4. Verfahren nach einem der vorherigen Ansprüche, **dadurch gekennzeichnet, dass**
- wenn das Überprüfungskriterium nicht erfüllt ist, der Simulationsschritt erneut ausgeführt wird,
- wobei mindestens ein Parameter des Druckprozessparameterdatensatzes im Vergleich zu dem im vorherigen Simulationsschritt verwendeten Druckprozessparameterdatensatz geändert ist.

5. Verfahren nach einem der vorherigen Ansprüche, **dadurch gekennzeichnet, dass**
- die gespeicherten historischen Druckdatensätze eine Mehrzahl von gespeicherten Verknüpfungen zwischen jeweils einem Trägermaterialparametersatz, einem Druckfarbeparameterdatensatz, einem Druckmaschinensteuerdatensatz und einem basierend auf den verknüpften Datensätzen gedruckten Dekorbild umfassen, das als digitales Druckdekorbild gespeichert ist.

6. Verfahren nach Anspruch 5, **dadurch gekennzeichnet, dass**
- in dem Simulationsschritt basierend auf der gespeicherten Mehrzahl von Verknüpfungen und zumindest dem zu druckenden Dekorzielbild, vorzugsweise zusätzlich basierend auf mindestens einem vorgegebenen Trägermaterialparameter und/oder mindestens einem vorgegebenen Druckfarbeparameter und/oder mindestens einem vorgegebenen Druckmaschinensteuerparameter, das digitale Dekorbild erstellt wird.

7. Verfahren nach Anspruch 5 oder 6, **dadurch gekennzeichnet, dass**
- die gespeicherte Mehrzahl von Verknüpfungen während eines Anlernprozesses generiert wird.

8. Verfahren nach einem der Ansprüche 5 bis 7, **dadurch gekennzeichnet, dass**
- die gespeicherte Mehrzahl von Verknüpfungen in Form eines neuronalen Netzes vorliegt.

9. Verfahren nach einem der vorherigen Ansprüche, **dadurch gekennzeichnet, dass** das Verfahren ferner umfasst:
- Durchführen des Druckprozesses in einem Druckschritt, durch eine Druckmaschine (114), basierend auf dem ausgegebenen Druckprozessparameterdatensatz, derart, dass ein gedrucktes Dekorbild auf dem Träger erstellt wird.

10. Verfahren nach Anspruch 9, **dadurch gekennzeichnet, dass** das Verfahren ferner umfasst:
- Überprüfen des gedruckten Dekorbilds, basierend auf dem Dekorzielbild und mindestens einem Druckqualitätskriterium, und
- wenn das Druckqualitätskriterium nicht erfüllt ist, erneutes Ausführen des Druckschritts,
- wobei mindestens ein Parameter des Druckprozessparameterdatensatzes im Vergleich zu dem im vorherigen Druckschritt verwendeten Druckprozessparameterdatensatz geändert ist.

11. Verfahren nach einem der Ansprüche 8 oder 9, **dadurch gekennzeichnet, dass**
- die gespeicherten historischen Druckdatensätze aktualisiert werden, basierend auf dem in einem Druckschritt verwendeten Druckprozessparameterdatensatz und dem in dem Druckschritt gedruckten Dekorbild.

12. Computerprogramm, umfassend Befehle, die bei der Ausführung des Computerprogramms durch einen Prozessor diesen veranlassen, das Verfahren nach einem der vorherigen Ansprüche auszuführen.

13. Computerlesbarer Datenträger, auf dem das Computerprogramm nach Anspruch 12 gespeichert ist.

14. Dekordrucksystem (100, 300), umfassend:
- mindestens ein Empfangsmodul (104, 304), eingerichtet zum Bereitstellen eines in einem Druckprozess zu druckenden Dekorzielbilds durch mindestens einen Dekorparameterdatensatz,
- mindestens ein Simulationsmodul (108, 308), eingerichtet zum Simulieren des Druckprozesses in einem Simulationsschritt, basierend auf dem bereitgestellten Dekorparameterdatensatz, mindestens einem Druckprozessparameterdatensatz und gespeicherten historischen Druckdatensätzen, derart, dass ein digitales Dekorbild erstellt wird,
- mindestens ein Überprüfungsmodul (110, 310), eingerichtet zum Überprüfen des erstellten digitalen Dekorbilds, basierend auf dem zu druckenden Dekorbild und mindestens einem Überprüfungskriterium,
- wobei das Überprüfen des erstellten digitalen Dekorbilds ein Vergleichen des durch den Simulationsschritt erstellten digitalen Dekorbilds und des Dekorzielbilds umfasst,
- wobei das mindestens eine Überprüfungskriterium ein Vergleichskriterium ist, das mindestens ein bestimmtes optisches Mindestähnlichkeitsmaß zwischen dem durch den Simulationsschritt erstellten digitalen Dekorbild und dem Dekorzielbild vorgibt, und
- mindestens ein Ausgabemodul (106, 306), eingerichtet zum Ausgeben des in dem Simulationsschritt verwendeten Druckprozessparameterdatensatzes, wenn das Überprüfungskriterium erfüllt ist.

## Claims

1. Method performed by at least one computing device for controlling a printing process for printing a decorative target image onto a substrate, comprising:
- providing the decorative target image to be printed in the printing process by at least one decorative parameter data set,
- simulating the printing process in a simulation step based on the decorative parameter data set, at least one printing process parameter data set and stored historical printing data sets such that a digital decorative image is generated,
- verifying the generated digital decorative image based on the decorative target image to be printed and at least one verification criterion,
- wherein the verifying of the generated digital decorative image comprises comparing the digital decorative image generated by the simulation step and the decorative target image,
- wherein the at least one verification criterion is a comparison criterion that specifies at least a predetermined minimum optical similarity measure between the digital decorative image generated by the simulation step and the decorative target image, and
- outputting the printing process parameter data set used in the simulation step to conduct the print process, if the verification criterion is met.

2. The method according to claim 1, **characterized in that**
- the printing process parameter data set comprises a substrate material parameter set and/or a printing colour parameter data set and/or a printing machine control parameter data set.

3. The method according to any one of the preceding claims, **characterized in that** the method further comprises:
- predetermining at least one substrate material parameter of a substrate to be used in the printing process, in particular at least one type of substrate material,
- wherein the simulation of the printing process in the simulation step is based on the predetermined substrate material parameter,
and/or
- predetermining at least one printing colour parameter to be used in the printing process, in particular at least one type of printing colour,
- wherein the simulation of the printing process in the simulation step is based on the predetermined printing colour parameter,
- predetermining at least one printing machine control parameter to be used in the printing process, in particular at least one printing machine type,
- wherein the simulation of the printing process in the simulation step is based on the predetermined printing machine control parameter.

4. The method according to any one of the preceding claims, **characterized in that**
- if the verification criterion is not met, the simulation step is executed again,
- wherein at least one parameter of the printing process parameter data set is changed compared to the printing process parameter data set used in the previous simulation step.

5. The method according to any one of the preceding claims, **characterized in that**
- the stored historical print data sets comprises a plurality of stored links between, respectively, a substrate parameter set, an printing colour parameter set, a printing machine control data set and a printed decorative image based on the linked data sets, wherein the printed decorative image is stored as a digital print decorative image.

6. The method according to claim 5, **characterized in that**
- in the simulation step, the digital decorative image is generated based on the stored plurality of links and at least the decorative target image to be printed, preferably additionally based on at least one predetermined substrate parameter and/or at least one predetermined ink parameter and/or at least one predetermined printing machine control parameter.

7. The method according to claim 5 or 6, **characterized in that**
- the stored plurality of links is generated during a learning process.

8. The method according to any one of claims 5 to 7, **characterized in that**
- the stored plurality of links is provided in the form of a neural network.

9. The method according to any one of the preceding claims, **characterized in that** the method further comprises:
- conducting the printing process in a printing step, by a printing machine (114), based on the output printing process parameter data set such that a printed decorative image is generated on the substrate.

10. The method according to claim 9, **characterized in that** the method further comprises:
- verifying the printed decorative image based on the decorative target image and at least one print quality criterion, and
- if the print quality criterion is not fulfilled, re-executing the printing step,
- wherein at least one parameter of the printing process parameter data set is changed compared to the printing process parameter data set used in the previous printing step.

11. The method according to one of claims 8 or 9, **characterized in that**
- the stored historical print data sets are updated based on the printing process parameter data set used in a printing step and the decorative image printed in the printing step.

12. A computer program comprising instructions which, when the computer program is executed by a processor, cause the processor to execute the method according to any one of the preceding claims.

13. A computer-readable medium on which is stored the computer program according to claim 12.

14. A decor printing system (100, 300), comprising:
- at least one receiving module (104, 304) configured to provide a decorative target image to be printed in a printing process by at least one decorative parameter data set,
- at least one simulation module (108, 308) configured to simulate the printing process in a simulation step based on the provided decorative parameter data set, at least one printing process parameter data set and stored historical printing data sets such that a digital decorative image is generated,
- at least one verification module (110, 310) configured to verify the created digital decorative image based on the decorative image to be printed and at least one verification criterion,
- wherein the verifying of the generated digital decorative image comprises comparing the digital decorative image generated by the simulation step and the decorative target image,
- wherein the at least one verification criterion is a comparison criterion that specifies at least a predetermined minimum optical similarity measure between the digital decorative image generated by the simulation step and the decorative target image and
- at least one output module (106, 306) configured to output the printing process parameter data set used in the simulation step if the verification criterion is met.

## Revendications

1. Procédé exécuté par au moins un dispositif de calcul pour commander un processus d'impression pour imprimer une image cible de décor sur un support, comprenant :
- fournir l'image cible de décor à imprimer dans le processus d'impression par au moins un ensemble de données de paramètres de décor,
- simuler le processus d'impression dans une étape de simulation, sur la base de l'ensemble de données de paramètres de décor, d'au moins un ensemble de données de paramètres de processus d'impression et d'ensembles de données d'impression historiques mémorisés, de telle sorte qu'une image de décor numérique soit créée,
- vérifier l'image de décor numérique créée, sur la base de l'image de décor cible à imprimer et d'au moins un critère de vérification,
- dans lequel la vérification de l'image de décor numérique créée comprend une comparaison de l'image de décor numérique créée par l'étape de simulation et de l'image de décor cible,
- dans lequel ledit au moins un critère de vérification est un critère de comparaison qui spécifie au moins une mesure de similarité optique minimale déterminée entre l'image de décor numérique créée par l'étape de simulation et l'image de décor cible, et
- si le critère de vérification est satisfait, émettre l'ensemble de données de paramètres de processus d'impression utilisé dans l'étape de simulation pour réaliser le processus d'impression.

2. Procédé selon la revendication 1, **caractérisé en ce que**
- l'ensemble de données de paramètres de processus d'impression comprend un ensemble de paramètres de matériau de support et/ou un ensemble de données de paramètres d'encre et/ou un ensemble de données de paramètres de commande de machine d'impression.

3. Procédé selon l'une quelconque des revendications précédentes, **caractérisé en ce que** le procédé comprend en outre :
- prédéterminer au moins un paramètre de matériau de support d'un support à utiliser dans le processus d'impression, en particulier d'au moins une sorte de matériau de support,
- la simulation du processus d'impression dans l'étape de simulation étant basée sur le paramètre de matériau de support prédéterminé,
et/ou
- prédéterminer au moins un paramètre d'encre d'impression à utiliser dans le processus d'impression, en particulier au moins une sorte d'encre d'impression,
- la simulation du processus d'impression dans l'étape de simulation étant basée sur le paramètre d'encre d'impression prédéterminé,
- prédéterminer au moins un paramètre de commande de machine d'impression à utiliser dans le processus d'impression, en particulier d'au moins une sorte de machine d'impression,
- la simulation du processus d'impression dans l'étape de simulation étant basée sur le paramètre de commande de machine d'impression prédéterminé.

4. Procédé selon l'une quelconque des revendications précédentes, **caractérisé en ce que**,
- si le critère de vérification n'est pas satisfait, l'étape de simulation est exécutée à nouveau,
- l'au moins un paramètre de l'ensemble de données de paramètres de processus d'impression étant modifié par rapport à l'ensemble de données de paramètres de processus d'impression utilisé dans l'étape de simulation précédente.

5. Procédé selon l'une quelconque des revendications précédentes, **caractérisé en ce que**
- les ensembles de données d'impression historiques stockés comprennent une pluralité de liens stockés, lesquels liens lient respectivement un ensemble de paramètres de matériau de support, un ensemble de données de paramètres d'encre d'impression, un ensemble de données de commande de machine d'impression et une image de décor imprimée sur la base des ensembles de données liés, laquelle image de décor imprimée est stockée en tant qu'image de décor d'impression numérique.

6. Procédé selon la revendication 5, **caractérisé en ce que**,
- dans l'étape de simulation, l'image de décor numérique est créée sur la base de la pluralité de liens stockés et d'au moins l'image de décor cible à imprimer, de préférence en outre sur la base d'au moins un paramètre de matériau de support prédéterminé et/ou d'au moins un paramètre d'encre d'impression prédéterminé et/ou d'au moins un paramètre de commande de machine d'impression prédéterminé.

7. Procédé selon la revendication 5 ou 6, **caractérisé en ce que**
- la pluralité de liens stockés est générée pendant un processus d'apprentissage.

8. Procédé selon l'une des revendications 5 à 7, **caractérisé en ce que**
- la pluralité stockée de liens se présente sous la forme d'un réseau neuronal.

9. Procédé selon l'une quelconque des revendications précédentes, **caractérisé en ce que** le procédé comprend en outre :
- exécuter le processus d'impression dans une étape d'impression, par une machine d'impression (114), sur la base de l'ensemble de données de paramètres de processus d'impression émis, de telle sorte qu'une image de décor imprimée soit créée sur le support.

10. Procédé selon la revendication 9, **caractérisé en ce que** le procédé comprend en outre:
- vérifier l'image de décor imprimée, sur la base de l'image de décor cible et d'au moins un critère de qualité d'impression, et
- si le critère de qualité d'impression n'est pas satisfait, exécuter à nouveau l'étape d'impression,
- dans lequel au moins un paramètre de l'ensemble de données de paramètres de processus d'impression est modifié par rapport à l'ensemble de données de paramètres de processus d'impression utilisé dans l'étape d'impression précédente.

11. Procédé selon l'une des revendications 8 ou 9, **caractérisé en ce que**
- les ensembles de données d'impression historiques stockés sont mis à jour sur la base de l'ensemble de données de paramètres de processus d'impression utilisé dans une étape d'impression et de l'image de décor imprimée dans l'étape d'impression.

12. Programme d'ordinateur comprenant des instructions qui, lorsque le programme d'ordinateur est exécuté par un processeur, amènent ce dernier à exécuter le procédé selon l'une quelconque des revendications précédentes.

13. Support d'information lisible par ordinateur sur lequel est stocké le programme d'ordinateur selon la revendication 12.

14. Système d'impression de décor (100, 300), comprenant :
- au moins un module de réception (104, 304), agencé pour fournir une image cible de décor à imprimer dans un processus d'impression par au moins un ensemble de données de paramètres de décor,
- au moins un module de simulation (108, 308), configuré pour simuler le processus d'impression dans une étape de simulation, sur la base de l'ensemble de données de paramètres de décor mis à disposition, d'au moins un ensemble de données de paramètres de processus d'impression et d'ensembles de données d'impression historiques stockés, de telle sorte qu'une image de décor numérique soit créée,
- au moins un module de vérification (110, 310), configuré pour vérifier l'image de décor numérique créée, sur la base de l'image de décor à imprimer et d'au moins un critère de vérification,
- la vérification de l'image de décor numérique créée comprenant une comparaison de l'image de décor numérique créée par l'étape de simulation et de l'image de décor cible,
- l'au moins un critère de vérification étant un critère de comparaison qui spécifie au moins une mesure de similarité optique minimale déterminée entre l'image de décor numérique créée par l'étape de simulation et l'image de décor cible, et
- au moins un module d'émission (106, 306) configuré pour émettre l'ensemble de données de paramètres de processus d'impression utilisé dans l'étape de simulation lorsque le critère de vérification est satisfait.
